# EUROPEAN PATENT APPLICATION

(11) **EP 4 818 951 A1**
(43) Date of publication of application: **07.10.2026**
(21) Application number: 26166636.6
(22) Date of filing: 23.03.2026
(51) Int. Cl.: G06F 21/60

(54) **COMMUNICATION DEVICE AND EMAIL SENDING METHOD CAPABLE OF SUPPRESSING LEAKAGE OF DESTINATION SET TO BCC TO EMAIL RECIPIENT**

(30) Priority: 31.03.2025 JP 2025058061
(71) Applicant: KYOCERA Document Solutions Inc., Osaka-shi, Osaka 540-8585 (JP)
(72) Inventor: Nomura, Kazuma, Osaka-shi, 540-8585 (JP); Takai, Kenji, Osaka-shi, 540-8585 (JP)
(74) Representative: Plougmann Vingtoft a/s

(57) **Abstract**

A communication device includes a first acceptance processing portion, a first setting processing portion, and a prohibition processing portion. The first acceptance processing portion accepts a setting operation for setting a destination category of a first destination of an email unsent. The first setting processing portion sets enable/disable of an encryption function for encrypting the email by S/MIME. The prohibition processing portion prohibits, when the encryption function is enabled, one or both of the acceptance of the setting operation for setting the destination category of the first destination to BCC by the first acceptance processing portion and the sending of the email including the first destination having the destination category set to BCC.

## Description

### BACKGROUND

The present disclosure relates to a communication device and an email sending method.

A communication device capable of encrypting an email using S/MIME and sending the email is known.

### SUMMARY

A communication device according to an aspect of the present disclosure includes a sending processing portion, a first acceptance processing portion, a first setting processing portion, and a prohibition processing portion. The sending processing portion sends an email. The first acceptance processing portion accepts a setting operation for setting a destination category of a first destination of the email unsent. The first setting processing portion sets enable/disable of an encryption function for encrypting the email by S/MIME. The prohibition processing portion prohibits, when the encryption function is enabled, one or both of the acceptance of the setting operation for setting the destination category of the first destination to BCC by the first acceptance processing portion and the sending of the email including the first destination having the destination category set to BCC by the sending processing portion.

An email sending method according to another aspect of the present disclosure includes: sending an email; accepting a setting operation for setting a destination category of a first destination of the email unsent; setting enable/disable of an encryption function for encrypting the email by S/MIME; and prohibiting, when the encryption function is enabled, one or both of the acceptance of the setting operation for setting the destination category of the first destination to BCC and the sending of the email including the first destination having the destination category set to BCC.

This Summary is provided to introduce a selection of concepts in a simplified form that are further described below in the Detailed Description with reference where appropriate to the accompanying drawings. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

Fig. 1 is a diagram showing a configuration of an image forming apparatus according to an embodiment of the present disclosure;
Fig. 2 is a diagram showing an example of a destination setting screen displayed on the image forming apparatus according to the embodiment of the present disclosure;
Fig. 3 is a diagram showing an example of an address input screen displayed on the image forming apparatus according to the embodiment of the present disclosure;
Fig. 4 is a diagram showing an example of the destination setting screen displayed on the image forming apparatus according to the embodiment of the present disclosure;
Fig. 5 is a diagram showing an example of the destination setting screen displayed on the image forming apparatus according to the embodiment of the present disclosure;
Fig. 6 is a diagram showing an example of the destination setting screen displayed on the image forming apparatus according to the embodiment of the present disclosure;
Fig. 7 is a diagram showing an example of an address book display screen displayed on the image forming apparatus according to the embodiment of the present disclosure;
Fig. 8 is a diagram showing an example of the destination setting screen displayed on the image forming apparatus according to the embodiment of the present disclosure;
Fig. 9 is a diagram showing an example of a first detail display screen displayed on the image forming apparatus according to the embodiment of the present disclosure;
Fig. 10 is a diagram showing an example of the destination setting screen displayed on the image forming apparatus according to the embodiment of the present disclosure;
Fig. 11 is a diagram showing an example of the first detail display screen displayed on the image forming apparatus according to the embodiment of the present disclosure;
Fig. 12 is a diagram showing an example of a sending history display screen displayed on the image forming apparatus according to the embodiment of the present disclosure;
Fig. 13 is a diagram showing an example of a second detail display screen displayed on the image forming apparatus according to the embodiment of the present disclosure;
Fig. 14 is a diagram showing an example of the destination setting screen displayed on the image forming apparatus according to the embodiment of the present disclosure;
Fig. 15 is a diagram showing an example of a destination setting screen displayed on an information processing apparatus communicably connected to the image forming apparatus according to the embodiment of the present disclosure;
Fig. 16 is a diagram showing an example of an execution state display screen displayed on the image forming apparatus according to the embodiment of the present disclosure;
Fig. 17 is a diagram showing an example of a job status display screen displayed on the image forming apparatus according to the embodiment of the present disclosure;
Fig. 18 is a diagram showing an example of a third detail display screen displayed on the image forming apparatus according to the embodiment of the present disclosure;
Fig. 19 is a diagram showing an example of the job status display screen displayed on the image forming apparatus according to the embodiment of the present disclosure;
Fig. 20 is a diagram showing an example of a fourth detail display screen displayed on the image forming apparatus according to the embodiment of the present disclosure;
Fig. 21 is a diagram showing an example of an advanced setting screen displayed on the image forming apparatus according to the embodiment of the present disclosure;
Fig. 22 is a diagram showing an example of a confirmation screen displayed on the image forming apparatus according to the embodiment of the present disclosure;
Fig. 23 is a diagram showing an example of the advanced setting screen displayed on the image forming apparatus according to the embodiment of the present disclosure;
Fig. 24 is a diagram showing an example of the destination setting screen displayed on the image forming apparatus according to the embodiment of the present disclosure;
Fig. 25 is a diagram showing an example of the confirmation screen displayed on the image forming apparatus according to the embodiment of the present disclosure;
Fig. 26 is a flowchart showing an example of first destination setting processing executed by the image forming apparatus according to the embodiment of the present disclosure;
Fig. 27 is a flowchart showing an example of first setting operation acceptance processing executed by the image forming apparatus according to the embodiment of the present disclosure;
Fig. 28 is a flowchart showing an example of second destination setting processing executed by the image forming apparatus according to the embodiment of the present disclosure;
Fig. 29 is a flowchart showing an example of second setting operation acceptance processing executed by the image forming apparatus according to the embodiment of the present disclosure;
Fig. 30 is a flowchart showing an example of third destination setting processing executed by the image forming apparatus according to the embodiment of the present disclosure;
Fig. 31 is a flowchart showing an example of third setting operation acceptance processing executed by the image forming apparatus according to the embodiment of the present disclosure;
Fig. 32 is a flowchart showing an example of encryption function switch processing executed by the image forming apparatus according to the embodiment of the present disclosure;
Fig. 33 is a diagram showing an example of the first detail display screen displayed on an image forming apparatus according to another embodiment of the present disclosure;
Fig. 34 is a diagram showing an example of the destination setting screen displayed on the image forming apparatus according to another embodiment of the present disclosure;
Fig. 35 is a diagram showing an example of the job status display screen displayed on the image forming apparatus according to another embodiment of the present disclosure;
Fig. 36 is a diagram showing an example of the job status display screen displayed on the image forming apparatus according to another embodiment of the present disclosure; and
Fig. 37 is a diagram showing an example of the execution state display screen displayed on the image forming apparatus according to another embodiment of the present disclosure.

### DETAILED DESCRIPTION

Hereinafter, embodiments of the present disclosure will be described with reference to the attached drawings. It is noted that the following embodiments are each an example of embodying the present disclosure and do not limit the technical scope of the present disclosure.

### [Configuration of image forming apparatus 1]

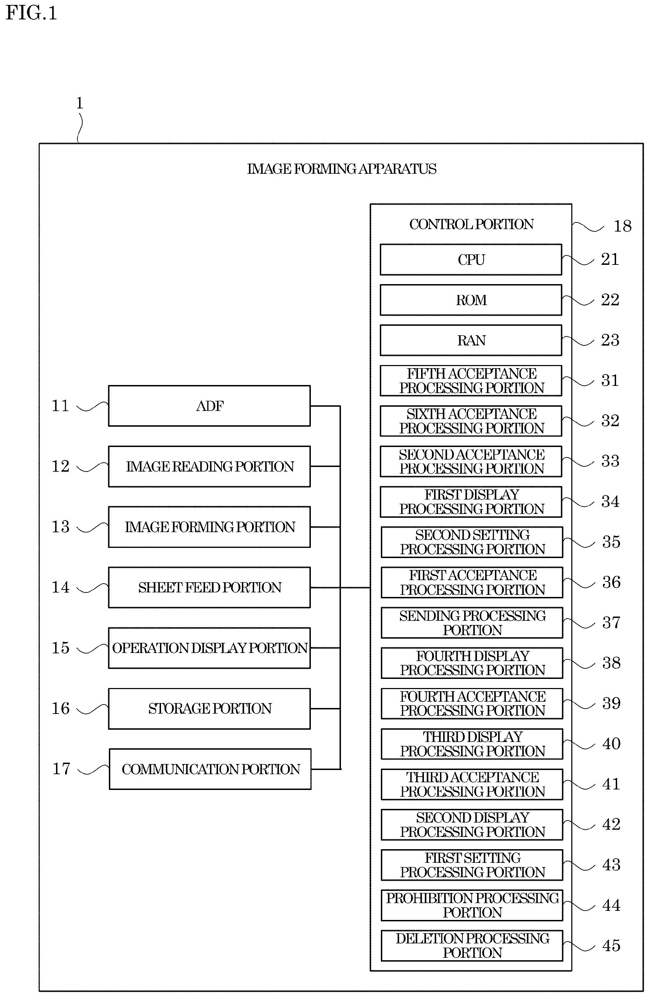

First, a configuration of an image forming apparatus 1 according to an embodiment of the present disclosure will be described with reference to Fig. 1.

The image forming apparatus 1 is a multifunction peripheral having a plurality of functions such as a scanning function for reading an image of a document sheet, a printing function for forming an image based on image data, a facsimile function, and a copying function. The image forming apparatus 1 is an example of a communication device according to the present disclosure. It is noted that the communication device according to the present disclosure may be an image processing apparatus such as a scanner, a facsimile apparatus, or a copying machine. Alternatively, the communication device according to the present disclosure may be an information processing apparatus such as a personal computer, a laptop computer, a smartphone, or a tablet terminal.

As shown in Fig. 1, the image forming apparatus 1 includes an ADF 11, an image reading portion 12, an image forming portion 13, a sheet feed portion 14, an operation display portion 15, a storage portion 16, a communication portion 17, and a control portion 18.

The ADF 11 conveys a document sheet from which an image is to be read by the image reading portion 12. The ADF 11 includes a document sheet setting portion, a plurality of conveying rollers, a document sheet holder, and a sheet discharge portion.

The image reading portion 12 realizes the scanning function. The image reading portion 12 includes a document sheet table, a light source, a plurality of mirrors, an optical lens, and a CCD.

The image forming portion 13 realizes the printing function. For example, the image forming portion 13 forms an image on a sheet supplied by the sheet feed portion 14 using electrophotography. For example, the image forming portion 13 includes a plurality of image forming units, a laser scanning unit, an intermediate transfer belt, a secondary transfer roller, a fixing device, and a sheet discharge tray. It is noted that the image forming portion 13 may form an image on a sheet supplied by the sheet feed portion 14 by other image forming methods such as an inkjet method.

The sheet feed portion 14 supplies sheets to the image forming portion 13. The sheet feed portion 14 includes a sheet feed cassette, a manual feed tray, and a plurality of conveying rollers.

The operation display portion 15 is a user interface of the image forming apparatus 1. The operation display portion 15 includes a display portion and an operation portion. The display portion displays various types of information in response to control instructions from the control portion 18. For example, the display portion is a flat panel display such as a liquid crystal display. The operation portion is used to input various types of information to the control portion 18 in accordance with user operations. For example, the operation portion includes operation keys and a touch panel.

The storage portion 16 is a non-volatile storage device. For example, the storage portion 16 is a storage device such as a non-volatile memory including a flash memory and/or the like, an SSD (Solid State Drive), or an HDD (Hard Disk Drive).

The communication portion 17 is a communication interface for executing wired or wireless data communication with an external device communicably connected to the image forming apparatus 1.

The control portion 18 collectively controls the image forming apparatus 1. As shown in Fig. 1, the control portion 18 includes a CPU 21, a ROM 22, and a RAM 23. The CPU 21 is a processor that executes various types of arithmetic processing. The ROM 22 is a non-volatile storage device in which information such as control programs for causing the CPU 21 to execute various types of processing is stored in advance. The RAM 23 is a volatile or non-volatile storage device that is used as a temporary storage memory (working area) for the various types of processing to be executed by the CPU 21. The CPU 21 executes the various control programs stored in advance in the ROM 22, to thus collectively control the image forming apparatus 1.

The image forming apparatus 1 is capable of attaching an image of a document sheet read by the scanning function to an email and sending it.

Furthermore, email addresses and address groups each including one or more email addresses are registered in advance in the image forming apparatus 1. Specifically, the storage portion 16 stores an address book including the email addresses and the address groups.

### [Functional configuration of control portion 18]

Next, a functional configuration of the control portion 18 for realizing the email sending function will be described with reference to Fig. 1.

As shown in Fig. 1, the control portion 18 includes a fifth acceptance processing portion 31, a sixth acceptance processing portion 32, a second acceptance processing portion 33, a first display processing portion 34, a second setting processing portion 35, a first acceptance processing portion 36, a sending processing portion 37, a fourth display processing portion 38, a fourth acceptance processing portion 39, a third display processing portion 40, a third acceptance processing portion 41, a second display processing portion 42, a first setting processing portion 43, a prohibition processing portion 44, and a deletion processing portion 45.

Specifically, a mail sending program for causing the CPU 21 to function as the respective processing portions described above is stored in advance in the ROM 22 of the control portion 18. Further, the control portion 18 executes the mail sending program stored in the ROM 22 to function as each of the respective processing portions described above.

It is noted that the mail sending program may be recorded on a computer-readable recording medium such as a CD, a DVD, or a flash memory, and may be read from the recording medium to be stored in the storage device such as the storage portion 16. Further, some or all of the processing portions included in the control portion 18 may be constituted of an electronic circuit. Furthermore, the mail sending program may alternatively be a program for causing a plurality of processors to function as the processing portions included in the control portion 18.

The fifth acceptance processing portion 31 accepts an address input operation for inputting an email address.

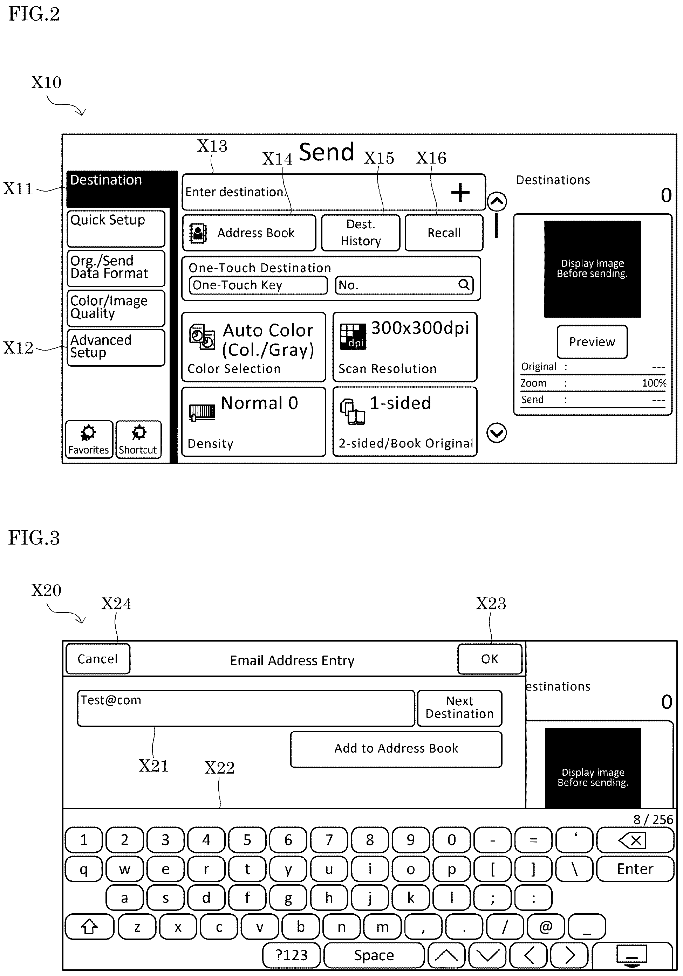

For example, in the image forming apparatus 1, a destination setting screen X10 shown in Fig. 2 is displayed on the operation display portion 15 in accordance with a predetermined user operation on the operation display portion 15. The destination setting screen X10 shown in Fig. 2 includes a destination tab X11, an advanced setting tab X12, an operation key X13, an operation key X14, an operation key X15, an operation key X16, and the like. It is noted that in Fig. 2, a state where the destination tab X11 is selected is indicated by highlight.

For example, the fifth acceptance processing portion 31 causes the operation display portion 15 to display an address input screen X20 shown in Fig. 3 in accordance with a user operation with respect to the operation key X13 included in the destination setting screen X10 shown in Fig. 2. The address input screen X20 shown in Fig. 3 includes an input address display field X21, a software keyboard X22, an operation key X23, an operation key X24, and the like. The input address display field X21 displays an input email address. The software keyboard X22 is used to input characters into the input address display field X21. The operation key X23 is used for the address input operation. The operation key X24 is used to input a display end instruction of the address input screen X20.

The sixth acceptance processing portion 32 accepts a registration address designation operation for designating an email address included in the address book.

The sixth acceptance processing portion 32 also accepts an address group designation operation for designating the address group included in the address book.

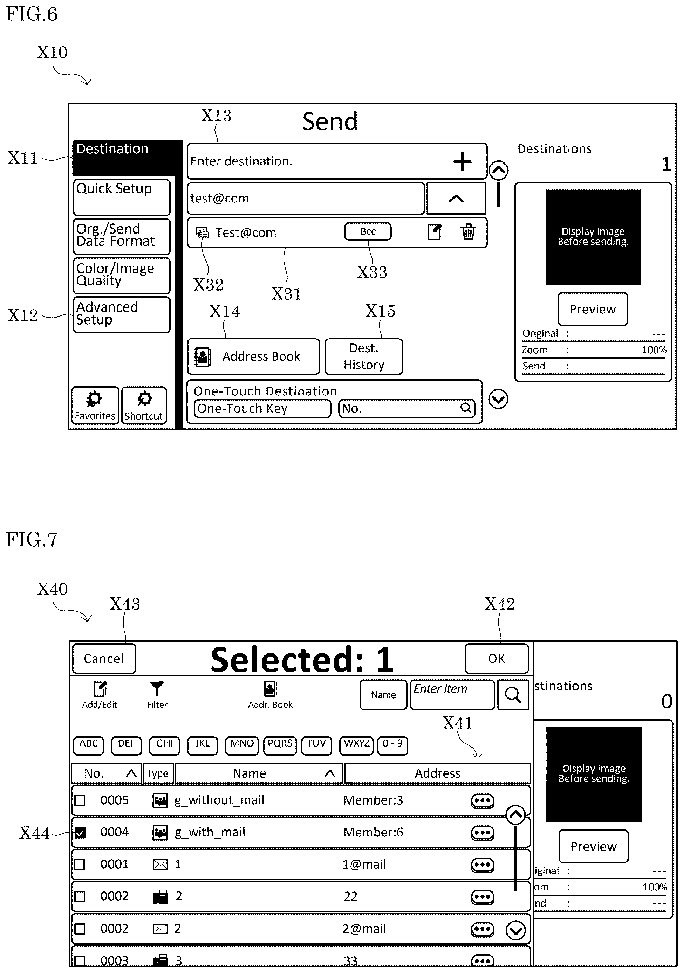

For example, the sixth acceptance processing portion 32 causes the operation display portion 15 to display an address book display screen X40 shown in Fig. 7 in accordance with a user operation with respect to the operation key X14 included in the destination setting screen X10 shown in Fig. 2. The address book display screen X40 shown in Fig. 7 includes an address book display area X41, an operation key X42, an operation key X43, and the like. The address book display area X41 displays a part of the address book in a form of a list. The address book display area X41 shown in Fig. 7 displays two address groups ("g_without_mail" and "g_with_mail") and two email addresses ("1@mail" and "2@mail"). It is noted that the address book also includes addresses other than those in the email addresses and the address groups. A check box X44 (see Fig. 7) is added to each address displayed in the address book display area X41. The check box X44 is used to provisionally designate an address. The operation key X42 is used to definitively designate an address, that is, used for the registration address designation operation and the address group designation operation. The operation key X43 is used to input a display end instruction of the address book display screen X40. It is noted that the user can perform a predetermined operation in the address book display screen X40 to arbitrarily switch the addresses displayed in the address book display area X41.

The second acceptance processing portion 33 causes the operation display portion 15 to display each of the sent emails, and accepts a first mail designation operation for designating the displayed sent email.

Furthermore, the second acceptance processing portion 33 accepts, together with the first mail designation operation, a second mail designation operation for designating the sent email by a method different from that of the first mail designation operation.

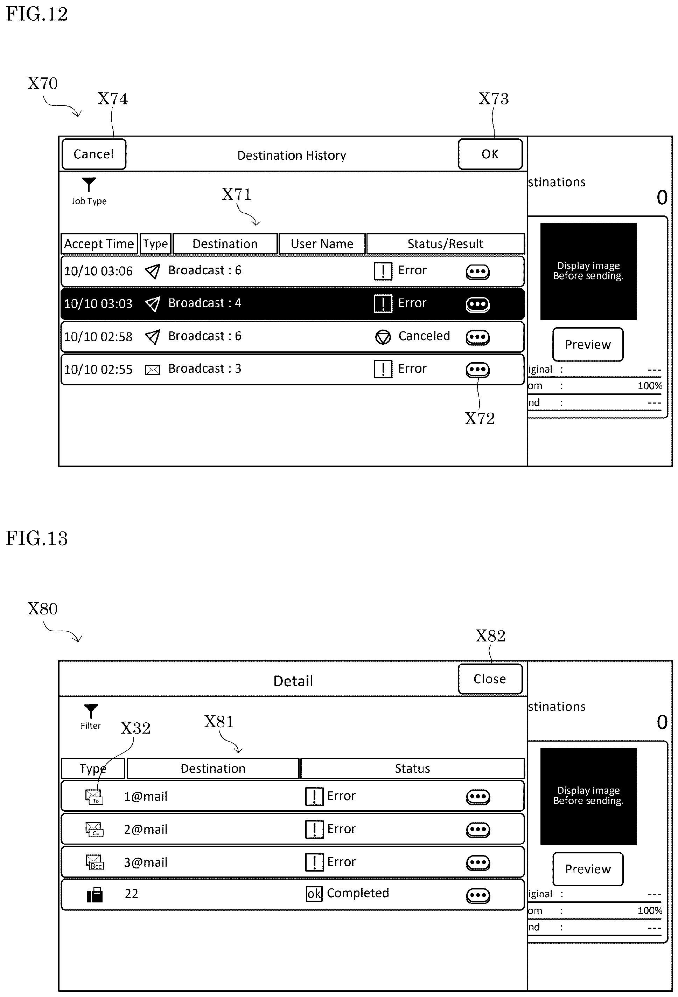

For example, the second acceptance processing portion 33 causes the operation display portion 15 to display a sending history display screen X70 shown in Fig. 12 in accordance with a user operation with respect to the operation key X15 included in the destination setting screen X10 shown in Fig. 2. The sending history display screen X70 shown in Fig. 12 includes a sending history display area X71, an operation key X73, an operation key X74, and the like. The sending history display area X71 displays each of the sent emails in a form of a list together with a detail display key X72 (see Fig. 12). The detail display key X72 is used for the second mail designation operation. In the sending history display area X71, an operation to provisionally designate the sent email is accepted. In Fig. 12, the provisionally-designated sent email is highlighted for display. The operation key X73 is used to definitively designate the sent email, that is, used for the first mail designation operation. The operation key X74 is used to input a display end instruction of the sending history display screen X70.

In accordance with the second mail designation operation, the first display processing portion 34 causes the operation display portion 15 to display each of the destinations included in the sent email designated by the second mail designation operation (hereinafter, will be referred to as "second destinations'") together with the destination category.

For example, the first display processing portion 34 causes the operation display portion 15 to display a second detail display screen X80 shown in Fig. 13 in accordance with a user operation with respect to the detail display key X72 corresponding to the highlighted sent email (the second mail designation operation) out of the four sent emails included in the sending history display screen X70 shown in Fig. 12. The second detail display screen X80 shown in Fig. 13 includes a detail display area X81, an operation key X82, and the like. The detail display area X81 displays each of the second destinations included in the sent email designated using the detail display key X72 in a form of a list together with an icon image X32 (see Fig. 13) indicating the destination category of the second destination. The operation key X82 is used to input a display end instruction of the second detail display screen X80.

In accordance with an address designation operation for designating an email address, the second setting processing portion 35 sets the email address designated by the address designation operation as a destination of the unsent email (hereinafter, will be referred to as a "first destination"), and also sets TO as the destination category of the first destination.

Specifically, the address designation operation includes the address input operation and the registration address designation operation.

For example, in accordance with the address input operation accepted in the address input screen X20 shown in Fig. 3 (an operation with respect to the operation key X23 in a state where an email address is displayed in the input address display field X21), the second setting processing portion 35 sets the email address input by the address input operation (the email address displayed in the input address display field X21) as the first destination, and sets TO as the destination category of the first destination.

Furthermore, in accordance with the address group designation operation for designating the address group, the second setting processing portion 35 sets each of the email addresses included in the address group designated by the address group designation operation as the first destination, and also collectively sets TO as the destination categories of the first destinations.

For example, in accordance with the address group designation operation accepted in the address book display screen X40 shown in Fig. 7 (an operation with respect to the operation key X42 in a state where the address group is provisionally designated), the second setting processing portion 35 sets each of the email addresses included in "g_with_mail" which is the address group designated using the check box X44, as the first destination, and also collectively sets TO as the destination categories of the first destinations.

Furthermore, in accordance with the first mail designation operation, the second setting processing portion 35 sets each of the second destinations included in the sent email designated by the first mail designation operation as the first destination, and also sets the destination category of each of the first destinations to be the same as the destination category of the second destination corresponding to the first destination.

For example, in accordance with the first mail designation operation accepted in the sending history display screen X70 shown in Fig. 12 (an operation with respect to the operation key X73 in a state where the sent email is provisionally designated), the second setting processing portion 35 sets each of the second destinations included in the highlighted sent email as the first destination, and also sets the destination category of each of the first destinations to be the same as the destination category of the second destination corresponding to the first destination.

The first acceptance processing portion 36 accepts a setting operation for setting the destination category of the first destination of the unsent email.

For example, the first acceptance processing portion 36 causes the operation display portion 15 (an example of a display portion according to the present disclosure) to display each of the first destinations set in accordance with the address designation operation together with the destination category, and accepts the setting operation for each of the first destinations.

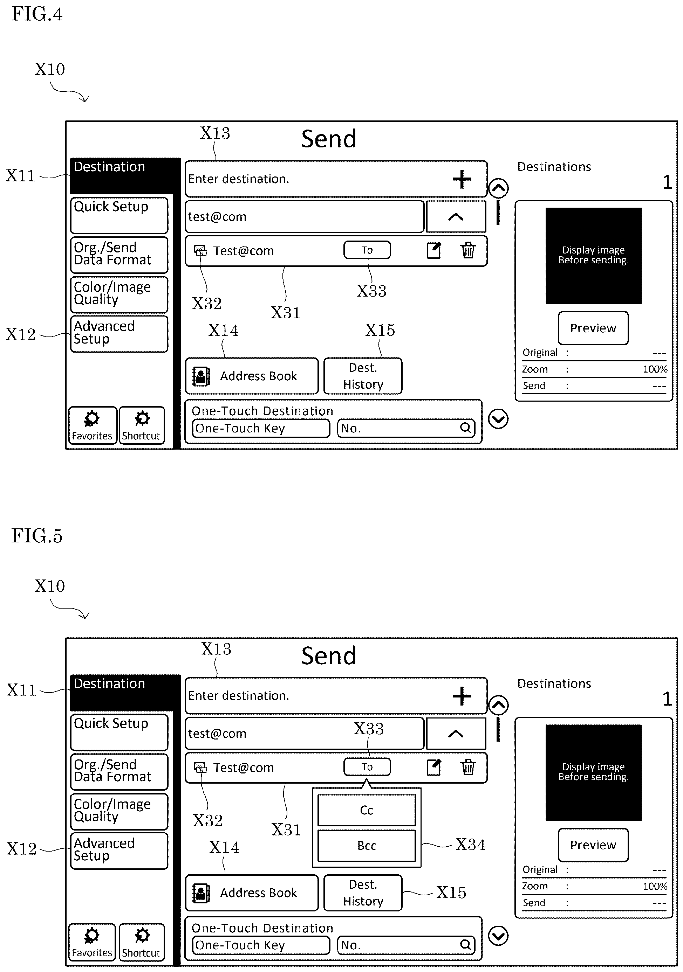

For example, the first acceptance processing portion 36 causes the operation display portion 15 to display a destination setting screen X10 shown in Fig. 4 in accordance with the address input operation accepted in the address input screen X20 shown in Fig. 3 (an operation with respect to the operation key X23 in a state where the email address is displayed in the input address display field X21). The destination setting screen X10 shown in Fig. 4 includes a destination display field X31. The destination display field X31 displays the first destination set by the second setting processing portion 35. In addition, the destination display field X31 includes an icon image X32 indicating the destination category of the first destination, and a destination category setting key X33 used for the setting operation. The destination category setting key X33 displays the current destination category of the first destination.

For example, the first acceptance processing portion 36 causes the operation display portion 15 to display a destination category selection area X34 shown in Fig. 5 in accordance with the setting operation accepted in the destination setting screen X10 shown in Fig. 4 (an operation with respect to the destination category setting key X33). The destination category selection area X34 is used to accept a user operation for selecting the destination category to be changed to. For example, in the destination category selection area X34 shown in Fig. 5, the user can select either CC or BCC as the destination category to be changed to.

For example, when a user operation to select BCC is accepted in the destination category selection area X34 shown in Fig. 5, the first acceptance processing portion 36 causes the operation display portion 15 to display the destination setting screen X10 shown in Fig. 6. In the destination setting screen X10 shown in Fig. 6, the fact that the destination category of the first destination has been changed to BCC is displayed by the icon image X32 and the destination category setting key X33.

In addition, the first acceptance processing portion 36 causes the operation display portion 15 to display each of the destination groups including one or a plurality of the first destinations set in accordance with the address group designation operation together with the destination categories set collectively, and accepts the setting operation for collectively setting the destination categories of the first destinations included in the destination group for each of the destination groups.

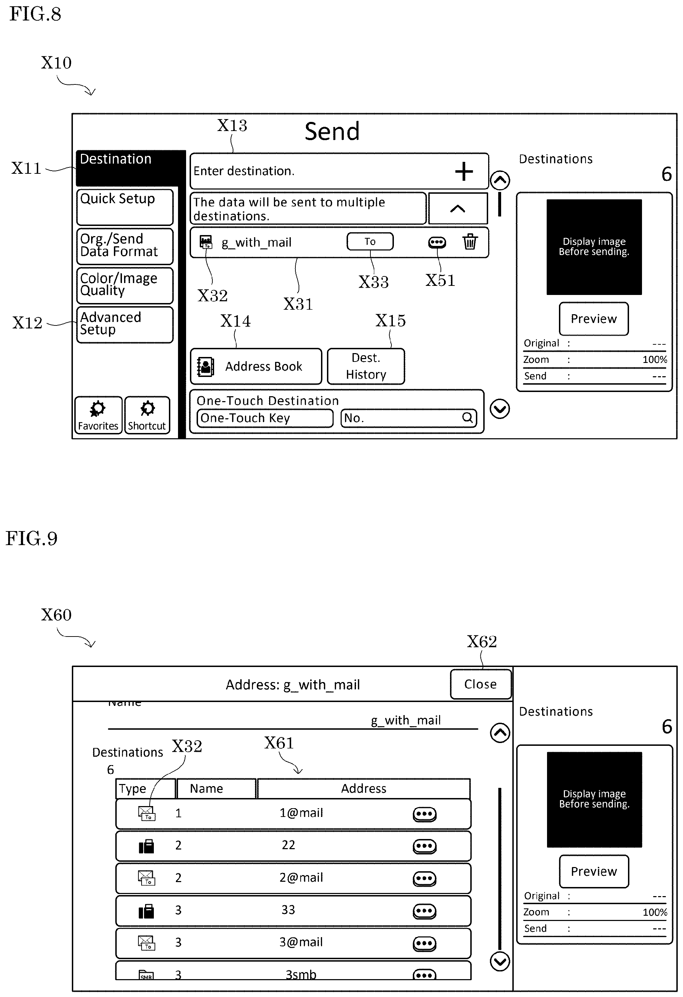

For example, in accordance with the address group designation operation accepted in the address book display screen X40 shown in Fig. 7 (an operation with respect to the operation key X42 in a state where the address group is provisionally designated), the first acceptance processing portion 36 causes the operation display portion 15 to display the destination setting screen X10 shown in Fig. 8. The destination display field X31 shown in Fig. 8 displays the destination group ("g_with_mail") constituted of the first destinations set by the second setting processing portion 35. The icon image X32 shown in Fig. 8 displays the destination category of each of the first destinations included in the destination group. The destination display field X31 shown in Fig. 8 includes a detail display key X51.

Here, in accordance with a destination group designation operation for designating the destination group displayed on the operation display portion 15, the first acceptance processing portion 36 causes the operation display portion 15 to display each of the first destinations included in the destination group designated by the destination group designation operation together with the destination category. Thus, the user can check each of the first destinations included in the destination group.

For example, the destination group designation operation is an operation with respect to the detail display key X51 shown in Fig. 8.

For example, in accordance with the destination group designation operation accepted in the destination setting screen X10 shown in Fig. 8 (an operation with respect to the detail display key X51), the first acceptance processing portion 36 causes the operation display portion 15 to display a first detail display screen X60 shown in Fig. 9. The first detail display screen X60 shown in Fig. 9 includes a detail display area X61, an operation key X62, and the like. The detail display area X61 displays each of the first destinations included in the destination group in a form of a list together with the icon image X32 indicating the destination category of the first destination (see Fig. 9). The detail display area X61 shown in Fig. 9 displays three email addresses ("1@mail", "2@mail", and "3@mail"). It is noted that the destination group also includes addresses other than the email addresses. The operation key X62 is used to input a display end instruction of the first detail display screen X60.

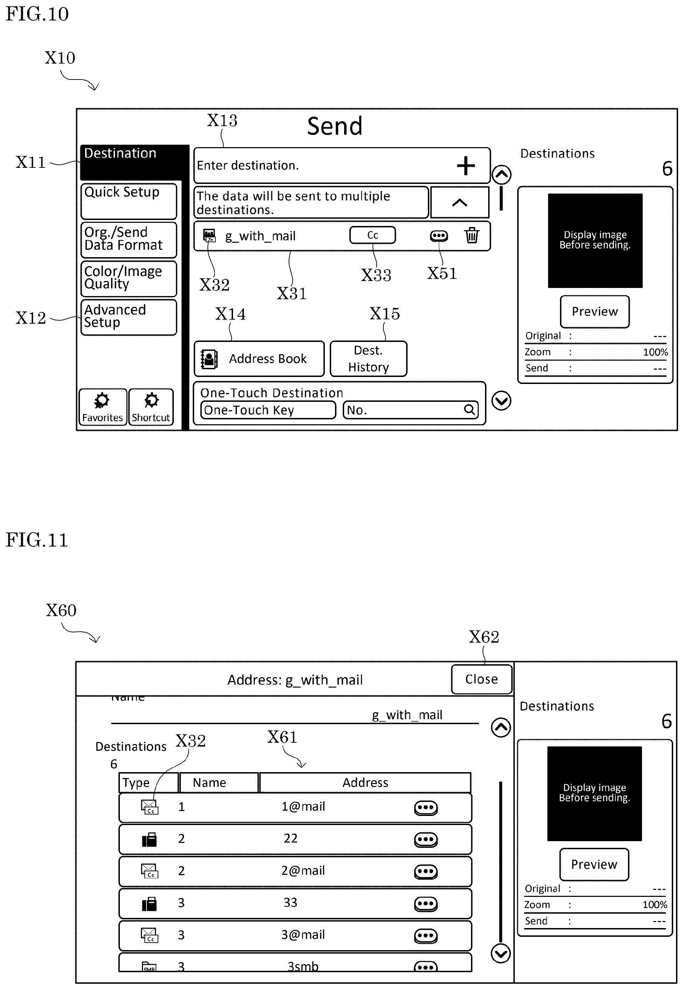

For example, in accordance with the setting operation accepted in the destination setting screen X10 shown in Fig. 8 (an operation with respect to the destination category setting key X33), the first acceptance processing portion 36 causes the operation display portion 15 to display the destination category selection area X34 (see Fig. 5). Then, in accordance with a user operation in the destination category selection area X34, the first acceptance processing portion 36 collectively sets the destination categories of the first destinations included in the destination group ("g_with_mail") displayed in the destination display field X31 (see Fig. 8). For example, when a user operation to select CC is accepted in the destination category selection area X34, the first acceptance processing portion 36 causes the operation display portion 15 to display the destination setting screen X10 shown in Fig. 10. Furthermore, when a user operation with respect to the detail display key X51 is accepted in the destination setting screen X10 shown in Fig. 10, the first acceptance processing portion 36 causes the operation display portion 15 to display the first detail display screen X60 shown in Fig. 11.

Furthermore, the first acceptance processing portion 36 causes the operation display portion 15 to display each of the first destinations set in accordance with the first mail designation operation together with the destination category, and accepts the setting operation for each of the first destinations.

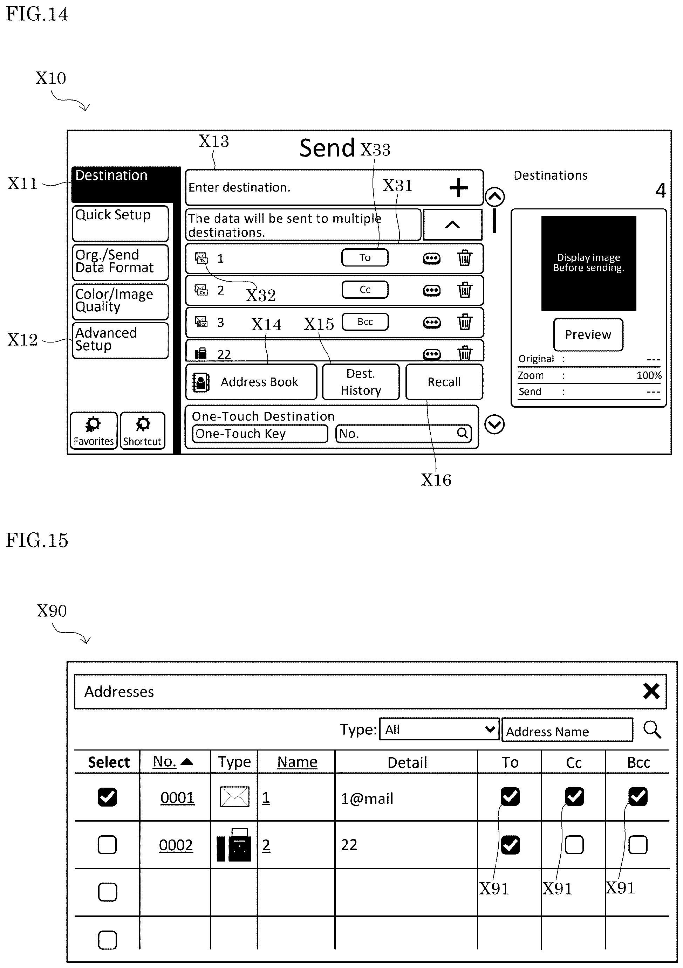

For example, in accordance with the first mail designation operation accepted in the sending history display screen X70 shown in Fig. 12 (an operation with respect to the operation key X73 in a state where the sent email is provisionally designated), the first acceptance processing portion 36 causes the operation display portion 15 to display the destination setting screen X10 shown in Fig. 14. It is noted that the operation key X16 shown in Fig. 2 and Fig. 14 is used for the first mail designation operation for designating the sent email that has been sent last.

Here, when the first destination is set in accordance with a user operation on the operation display portion 15 (an example of a first display portion according to the present disclosure), the first acceptance processing portion 36 causes the operation display portion 15 to display each of the set first destinations, and accepts the setting operation for setting the destination category to one of TO, CC, and BCC for each of the first destinations.

In addition, when the first destination is set in accordance with a user operation on an operation display portion of another communication device such as a personal computer that is communicably connected to the image forming apparatus 1 (an example of a second display portion according to the present disclosure), the first acceptance processing portion 36 causes the operation display portion to display each of the set first destinations, and accepts the setting operation for setting the destination category to one or more of TO, CC, and BCC for each of the first destinations.

For example, when the address designation operation is accepted on an operation display portion of the another communication device, the first acceptance processing portion 36 causes the operation display portion to display a destination setting screen X90 shown in Fig. 15. The destination setting screen X90 shown in Fig. 15 displays each of the first destinations set in accordance with the address designation operation in a form of a list together with a check box X91 corresponding to "TO", a check box X91 corresponding to "CC", and a check box X91 corresponding to "BCC". Each of the check boxes X91 is used to turn on/off the setting of the corresponding destination category.

The sending processing portion 37 sends the email.

For example, when a user operation with respect to a start key (not shown) included in the operation display portion 15 is accepted in a state where the first destination is set, the sending processing portion 37 executes sending processing. In the sending processing, reading processing for reading an image of a document sheet using the image reading portion 12 is executed, the image of the document sheet read by the reading processing is attached to the email, and the email having the image of the document sheet attached thereto is sent to each of the first destinations. The image reading portion 12 reads the image of the document sheet to be attached to the email in accordance with an input of an instruction to send the email (an operation with respect to the start key).

The fourth display processing portion 38 causes the operation display portion 15 to display any one of the first destinations included in the email to be sent while the image reading portion 12 is reading the image of the document sheet.

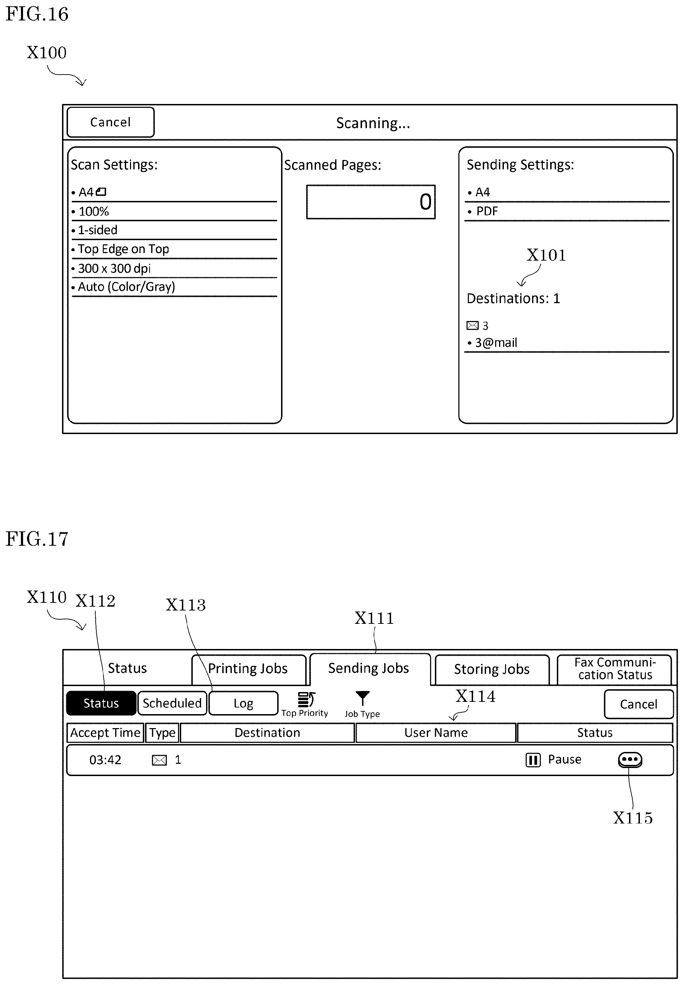

For example, the fourth display processing portion 38 causes the operation display portion 15 to display an execution state display screen X100 shown in Fig. 16 while the image reading portion 12 is reading the image of the document sheet. The execution state display screen X100 is a screen for displaying information related to a job being executed. The execution state display screen X100 shown in Fig. 16 includes a destination display area X101. The destination display area X101 displays any one of the first destinations included in the email to be sent.

The fourth acceptance processing portion 39 causes the operation display portion 15 to display each of the emails being sent, and accepts a fourth mail designation operation for designating the displayed email being sent.

For example, in accordance with a predetermined user operation on the operation display portion 15, the fourth acceptance processing portion 39 displays a job status display screen X110 shown in Fig. 17. The job status display screen X110 shown in Fig. 17 includes a sending job tab X111, a status key X112, a log key X113, a job-in-progress display area X114, a detail display key X115, and the like. It is noted that Fig. 17 shows the job status display screen X110 in a state where the sending job tab X111 is selected. Also in Fig. 17, a state where the status key X112 is selected is indicated by highlight. The job-in-progress display area X114 displays each of the emails being sent together with the detail display key X115. The detail display key X115 is used for the fourth mail designation operation.

In accordance with the fourth mail designation operation, the third display processing portion 40 causes the operation display portion 15 to display each of the destinations included in the email being sent (hereinafter, will be referred to as "third destinations"), that has been designated by the fourth mail designation operation, together with the destination category.

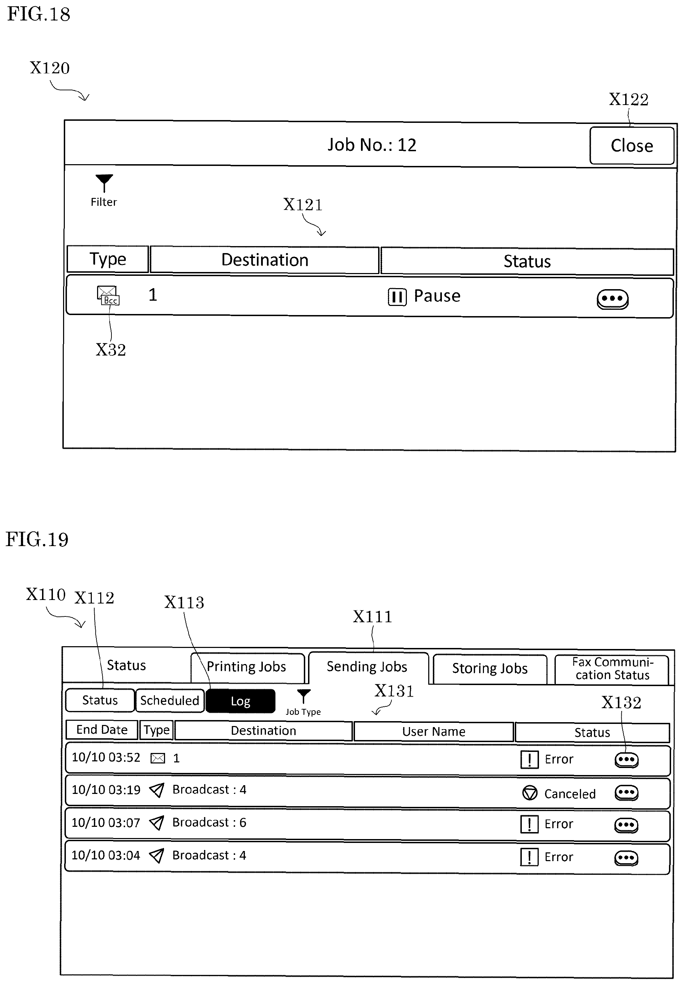

For example, in accordance with the fourth mail designation operation accepted in the job status display screen X110 shown in Fig. 17 (an operation with respect to the detail display key X115), the third display processing portion 40 causes the operation display portion 15 to display a third detail display screen X120 shown in Fig. 18. The third detail display screen X120 shown in Fig. 18 includes a detail display area X121, an operation key X122, and the like. The detail display area X121 displays each of the third destinations included in the email being sent, that has been designated using the detail display key X115, in a form of a list together with the icon image X32 indicating the destination category of the third destination (see Fig. 18). The operation key X122 is used to input a display end instruction of the third detail display screen X120.

The third acceptance processing portion 41 causes the operation display portion 15 to display each of the sent emails, and accepts a third mail designation operation for designating the displayed sent email.

For example, when a user operation with respect to the log key X113 is accepted in the job status display screen X110 shown in Fig. 17, the third acceptance processing portion 41 causes the operation display portion 15 to display a completed job display area X131 shown in Fig. 19. It is noted that in Fig. 19, a state where the log key X113 is selected is indicated by highlight. In the completed job display area X131, each of the sent emails is displayed together with a detail display key X132. The detail display key X132 is used for the third mail designation operation.

In accordance with the third mail designation operation, the second display processing portion 42 causes the operation display portion 15 to display each of the second destinations included in the sent email designated by the third mail designation operation together with the destination category.

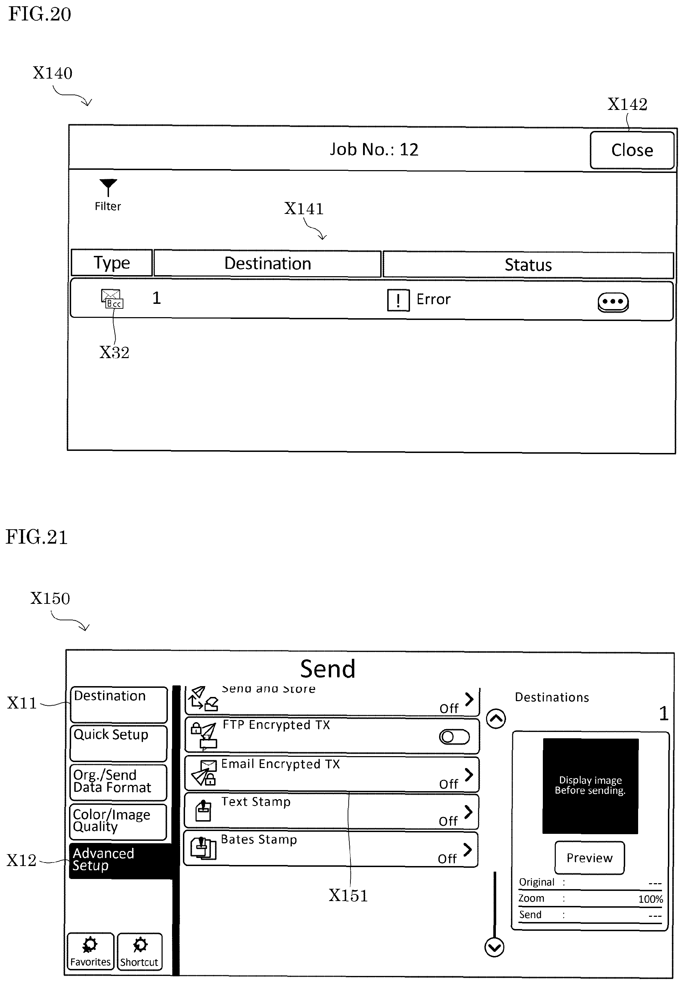

For example, in accordance with the third mail designation operation accepted in the completed job display area X131 shown in Fig. 19 (an operation with respect to the detail display key X132), the second display processing portion 42 causes the operation display portion 15 to display a fourth detail display screen X140 shown in Fig. 20. The fourth detail display screen X140 shown in Fig. 20 includes a detail display area X141, an operation key X142, and the like. The detail display area X141 displays each of the second destinations included in the sent email designated using the detail display key X132 in a form of a list together with the icon image X32 indicating the destination category of the second destination (see Fig. 20). The operation key X142 is used to input a display end instruction of the fourth detail display screen X140.

The first setting processing portion 43 sets enable/disable of an encryption function for encrypting the email using S/MIME.

For example, in the image forming apparatus 1, in accordance with a user operation with respect to the advanced setting tab X12 included in the destination setting screen X10 shown in Fig. 2, an advanced setting screen X150 shown in Fig. 21 is displayed on the operation display portion 15. The advanced setting screen X150 shown in Fig. 21 includes an operation key X151. The operation key X151 displays information indicating whether or not the encryption function is currently enabled.

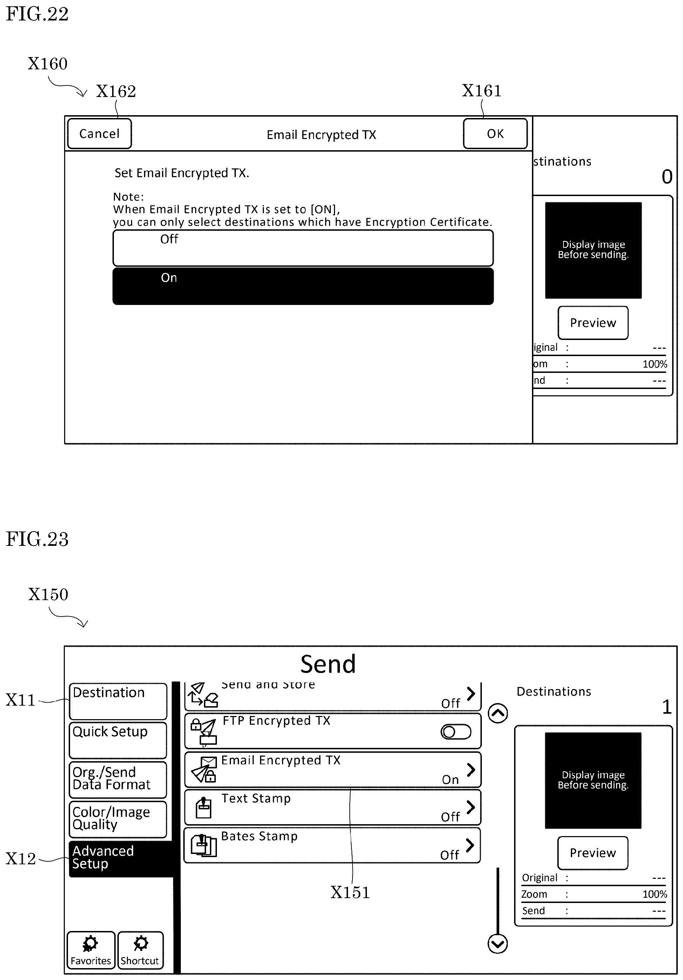

Furthermore, in the image forming apparatus 1, when a user operation with respect to the operation key X151 is accepted in the advanced setting screen X150 shown in Fig. 21, a confirmation screen X160 shown in Fig. 22 is displayed on the operation display portion 15. The confirmation screen X160 shown in Fig. 22 includes an operation key X161 and an operation key X162 along with a message for the user. The operation key X161 is used for a function switch operation to switch the encryption function between enable and disable. Further, the operation key X162 is used to input a display end instruction of the confirmation screen X160.

In accordance with the function switch operation accepted in the confirmation screen X160 shown in Fig. 22 (an operation with respect to the operation key X161), the first setting processing portion 43 switches enable/disable of the encryption function.

For example, in the image forming apparatus 1, when the function switch operation is accepted in the confirmation screen X160 shown in Fig. 22 and the encryption function is switched from disabled to enabled, the advanced setting screen X150 shown in Fig. 23 is displayed. The operation key X151 included in Fig. 23 displays information indicating that the encryption function is currently enabled.

Incidentally, when the email is encrypted using S/MIME and sent, information generated from a certificate of the first destination, that corresponds to each of the first destinations of the email, is embedded in a text of the email. Therefore, when the email encrypted using S/MIME is sent to a plurality of first destinations including the first destination set to BCC, there is a fear that the first destination set to BCC will be leaked to a recipient of the email.

In contrast, in the image forming apparatus 1 according to the embodiment of the present disclosure, it is possible to suppress leakage of the first destination set to BCC to the recipient of the email, as will be described below.

When the encryption function is enabled, the prohibition processing portion 44 prohibits the acceptance of the setting operation for setting the destination category of the first destination to BCC by the first acceptance processing portion 36.

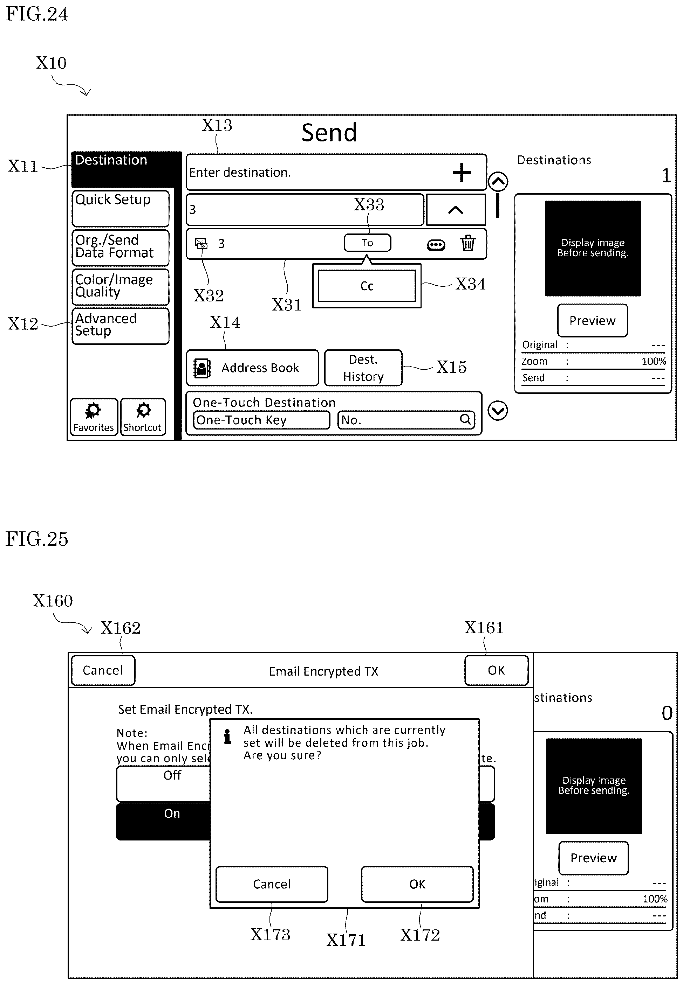

For example, when the encryption function is enabled, the prohibition processing portion 44 restricts the destination categories to be displayed in the destination category selection area X34 (hides BCC), as shown in Fig. 24. In other words, acceptance of a user operation to select BCC in the destination category selection area X34 is prohibited.

Furthermore, when the encryption function is enabled, the prohibition processing portion 44 prohibits the acceptance of the first mail designation operation for designating the sent email that includes the second destination having the destination category set to BCC.

For example, when the encryption function is enabled, the prohibition processing portion 44 prohibits display of the sent email that includes the second destination having the destination category set to BCC, in the sending history display screen X70 (see Fig. 12).

It is noted that in the image forming apparatus 1, when the encryption function is enabled, display of the sent email that includes the second destination without the certificate in the sending history display screen X70 (see Fig. 12) is also prohibited.

When the encryption function is set from disabled to enabled by the first setting processing portion 43, the deletion processing portion 45 deletes at least the first destination having the destination category set to BCC out of the set first destinations.

For example, when the encryption function is set from disabled to enabled by the first setting processing portion 43, the deletion processing portion 45 deletes all of the set first destinations.

Here, in the image forming apparatus 1, when the function switch operation is accepted in the confirmation screen X160 shown in Fig. 22 to switch the encryption function from disabled to enabled, and when there is a first destination having the destination category set to BCC, the switch of the encryption function by the first setting processing portion 43 is suspended, and a message display area X171 shown in Fig. 25 is displayed on the operation display portion 15. The message display area X171 displays an operation key X172 and an operation key X173 together with a message indicating that all of the set first destinations will be deleted when the encryption function is switched from disabled to enabled. The operation key X172 is used to input an instruction to permit the switch of the encryption function by the first setting processing portion 43. The operation key X173 is used to input an instruction to prohibit the switch of the encryption function by the first setting processing portion 43.

It is noted that when the encryption function is set from disabled to enabled by the first setting processing portion 43, the deletion processing portion 45 may delete only the first destination having the destination category set to BCC out of the set first destinations.

### [First destination setting processing]

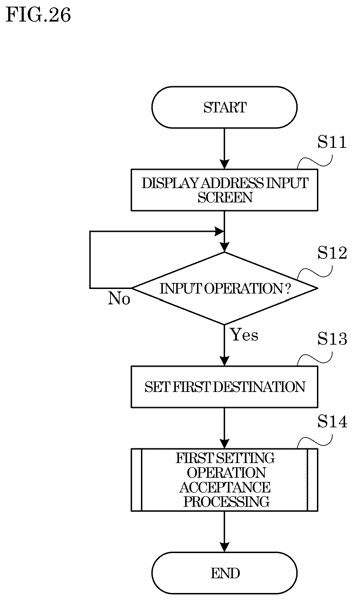

Hereinafter, exemplary procedures of first destination setting processing executed by the control portion 18 in the image forming apparatus 1 will be described with reference to Fig. 26. Here, Step S11, Step S12, ... represent numbers of processing procedures to be executed by the control portion 18. It is noted that the first destination setting processing is executed when a user operation with respect to the operation key X13 is accepted in the destination setting screen X10 shown in Fig. 2.

### <Step S11>

First, in Step S11, the control portion 18 causes the operation display portion 15 to display the address input screen X20 shown in Fig. 3. The processing of Step S11 is executed by the fifth acceptance processing portion 31 of the control portion 18.

### <Step S12>

In Step S12, the control portion 18 determines whether or not the address input operation has been accepted in the address input screen X20 shown in Fig. 3.

Here, when determining that the address input operation has been accepted (Yes in S12), the control portion 18 shifts the processing to Step S13. On the other hand, when determining that the address input operation has not been accepted (No in S12), the control portion 18 waits for the acceptance of the address input operation in Step S12.

### <Step S13>

In Step S13, in accordance with the address input operation, the control portion 18 sets the email address input by the address input operation as the first destination, and also sets TO as the destination category of the first destination. The processing of Step S13 is executed by the second setting processing portion 35 of the control portion 18.

### <Step S14>

In Step S14, the control portion 18 executes first setting operation acceptance processing to be described below.

### [First setting operation acceptance processing]

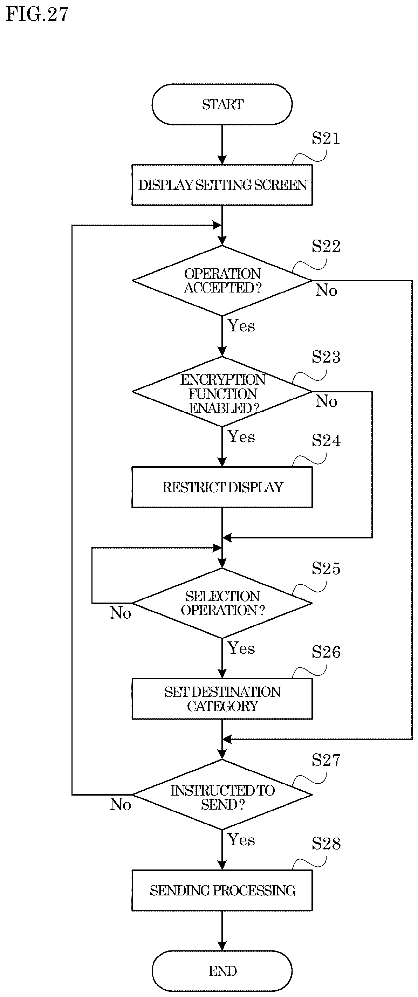

Next, with reference to Fig. 27, an example of a part of an email sending method according to the present disclosure will be described along with exemplary procedures of the first setting operation acceptance processing executed in Step S14 in the first destination setting processing.

### <Step S21>

First, in Step S21, the control portion 18 causes the operation display portion 15 to display the destination setting screen X10 (see Fig. 4) including the destination display field X31 corresponding to the first destination set in accordance with the address input operation. The processing of Step S21 is an example of accepting according to the present disclosure and is executed by the first acceptance processing portion 36 of the control portion 18.

### <Step S22>

In Step S22, the control portion 18 determines whether or not the setting operation (an operation with respect to the destination category setting key X33) has been accepted in the destination setting screen X10.

Here, when determining that the setting operation has been accepted (Yes in S22), the control portion 18 shifts the processing to Step S23. On the other hand, when determining that the setting operation has not been accepted (No in S22), the control portion 18 shifts the processing to Step S27.

### <Step S23>

In Step S23, the control portion 18 determines whether or not the encryption function is enabled.

Here, when determining that the encryption function is enabled (Yes in S23), the control portion 18 shifts the processing to Step S24. On the other hand, when determining that the encryption function is not enabled (No in S23), the control portion 18 shifts the processing to Step S25.

### <Step S24>

In Step S24, the control portion 18 restricts the destination category to be displayed to TO or CC in the destination category selection area X34 displayed in accordance with the setting operation (see Fig. 5 and Fig. 24). Thus, the acceptance of a user operation to select BCC is prohibited. The processing of Step S24 is an example of prohibiting according to the present disclosure and is executed by the prohibition processing portion 44 of the control portion 18.

### <Step S25>

In Step S25, the control portion 18 determines whether or not a user operation for selecting the destination category to be changed to has been accepted in the destination category selection area X34.

Here, when determining that a user operation for selecting the destination category to be changed to has been accepted (Yes in S25), the control portion 18 shifts the processing to Step S26. On the other hand, when determining that a user operation for selecting the destination category to be changed to has not been accepted (No in S25), the control portion 18 waits for the user operation for selecting the destination category to be changed to in Step S25.

### <Step S26>

In Step S26, the control portion 18 sets the destination category in accordance with the user operation for selecting the destination category to be changed to.

### <Step S27>

In Step S27, the control portion 18 determines whether or not an instruction to send the email has been input.

Specifically, the control portion 18 determines that an instruction to send the email has been input when a user operation with respect to the start key (not shown) included in the operation display portion 15 is accepted in a state where the first destination address is set.

Here, when determining that the instruction to send the email has been input (Yes in S27), the control portion 18 shifts the processing to Step S28. On the other hand, when determining that the instruction to send the email has not been input (No in S27), the control portion 18 shifts the processing to Step S22.

### <Step S28>

In Step S28, the control portion 18 executes the sending processing. The processing of Step S28 is an example of sending according to the present disclosure and is executed by the sending processing portion 37 of the control portion 18.

### [Second destination setting processing]

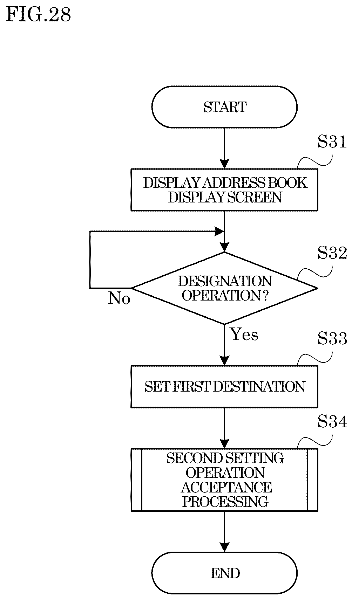

Next, exemplary procedures of second destination setting processing executed by the control portion 18 in the image forming apparatus 1 will be described with reference to Fig. 28. It is noted that the second destination setting processing is executed when a user operation with respect to the operation key X14 is accepted in the destination setting screen X10 shown in Fig. 2.

### <Step S31>

First, in Step S31, the control portion 18 causes the operation display portion 15 to display the address book display screen X40 (see Fig. 7). The processing of Step S31 is executed by the sixth acceptance processing portion 32 of the control portion 18.

### <Step S32>

In Step S32, the control portion 18 determines whether or not the registration address designation operation or the address group designation operation has been accepted in the address book display screen X40.

Here, when determining that the registration address designation operation or the address group designation operation has been accepted (Yes in S32), the control portion 18 shifts the processing to Step S33. On the other hand, when determining that the registration address designation operation or the address group designation operation has not been accepted (No in S32), the control portion 18 waits for the acceptance of the registration address designation operation or the address group designation operation in Step S32.

### <Step S33>

In Step S33, the control portion 18 sets the first destination in accordance with the operation accepted in Step S32. Specifically, in accordance with the registration address designation operation accepted in Step S32, the control portion 18 sets the email address designated by the registration address designation operation as the first destination, and also sets TO as the destination category of the first destination. Furthermore, in accordance with the address group designation operation accepted in Step S32, the control portion 18 sets each of the email addresses included in the address group designated by the address group designation operation as the first destination, and also collectively sets TO as the destination categories of the first destinations. The processing of Step S33 is executed by the second setting processing portion 35 of the control portion 18.

### <Step S34>

In Step S34, the control portion 18 executes second setting operation acceptance processing to be described below.

### [Second setting operation acceptance processing]

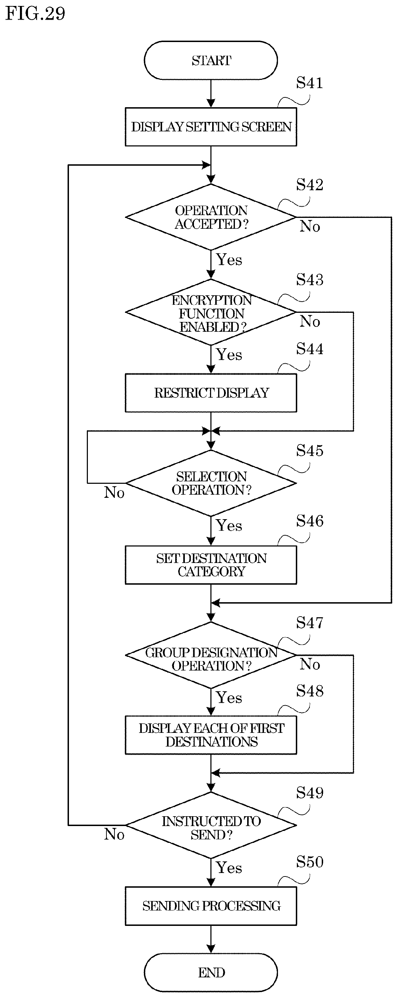

Next, with reference to Fig. 29, another example of a part of the email sending method according to the present disclosure will be described along with exemplary procedures of the second setting operation acceptance processing executed in Step S34 in the second destination setting processing.

### <Step S41>

First, in Step S41, the control portion 18 causes the operation display portion 15 to display the destination setting screen X10 (see Fig. 8) including the destination display field X31 corresponding to the first destination set by the registration address designation operation or the destination group set in accordance with the address group designation operation. The processing of Step S41 is another example of accepting according to the present disclosure and is executed by the first acceptance processing portion 36 of the control portion 18.

### <Step S42>

In Step S42, the control portion 18 determines whether or not the setting operation (an operation with respect to the destination category setting key X33) has been accepted in the destination setting screen X10.

Here, when determining that the setting operation has been accepted (Yes in S42), the control portion 18 shifts the processing to Step S43. On the other hand, when determining that the setting operation has not been accepted (No in S42), the control portion 18 shifts the processing to Step S47.

### <Step S43>

In Step S43, the control portion 18 determines whether or not the encryption function is enabled.

Here, when determining that the encryption function is enabled (Yes in S43), the control portion 18 shifts the processing to Step S44. On the other hand, when determining that the encryption function is not enabled (No in S43), the control portion 18 shifts the processing to Step S45.

### <Step S44>

In Step S44, the control portion 18 restricts the destination category to be displayed to TO or CC in the destination category selection area X34 displayed in accordance with the setting operation (see Fig. 5 and Fig. 24). The processing of Step S44 is another example of prohibiting according to the present disclosure and is executed by the prohibition processing portion 44 of the control portion 18.

### <Step S45>

In Step S45, the control portion 18 determines whether or not a user operation for selecting the destination category to be changed to has been accepted in the destination category selection area X34.

Here, when determining that a user operation for selecting the destination category to be changed to has been accepted (Yes in S45), the control portion 18 shifts the processing to Step S46. On the other hand, when determining that a user operation for selecting the destination category to be changed to has not been accepted (No in S45), the control portion 18 waits for the user operation for selecting the destination category to be changed to in Step S45.

### <Step S46>

In Step S46, the control portion 18 sets the destination category in accordance with the user operation for selecting the destination category to be changed to. Specifically, when an operation with respect to the destination category setting key X33 included in the destination display field X31 in which the first destination is displayed is accepted, the control portion 18 sets the destination category of the first destination. Furthermore, when an operation with respect to the destination category setting key X33 included in the destination display field X31 in which the destination group is displayed is accepted, the control portion 18 collectively sets the destination categories of the first destinations included in the destination group.

### <Step S47>

In Step S47, the control portion 18 determines whether or not the destination group designation operation has been accepted.

Specifically, the control portion 18 determines that the destination group designation operation has been accepted when a user operation with respect to the detail display key X51 (see Fig. 8) included in the destination display field X31 in which the destination group is displayed is accepted.

Here, when determining that the destination group designation operation has been accepted (Yes in S47), the control portion 18 shifts the processing to Step S48. On the other hand, when determining that the destination group designation operation has not been accepted (No in S47), the control portion 18 shifts the processing to Step S49.

### <Step S48>

In Step S48, the control portion 18 causes the operation display portion 15 to display the first detail display screen X60 (see Fig. 9) including each of the first destinations included in the destination group designated by the destination group designation operation. Furthermore, in accordance with an input of a display end instruction of the first detail display screen X60, the control portion 18 shifts the processing to Step S49. The processing of Step S48 is executed by the first acceptance processing portion 36 of the control portion 18.

### <Step S49>

In Step S49, the control portion 18 determines whether or not an instruction to send the email has been input.

Here, when determining that the instruction to send the email has been input (Yes in S49), the control portion 18 shifts the processing to Step S50. On the other hand, when determining that the instruction to send the email has not been input (No in S49), the control portion 18 shifts the processing to Step S42.

### <Step S50>

In Step S50, the control portion 18 executes the sending processing. The processing of Step S50 is another example of sending according to the present disclosure and is executed by the sending processing portion 37 of the control portion 18.

### [Third destination setting processing]

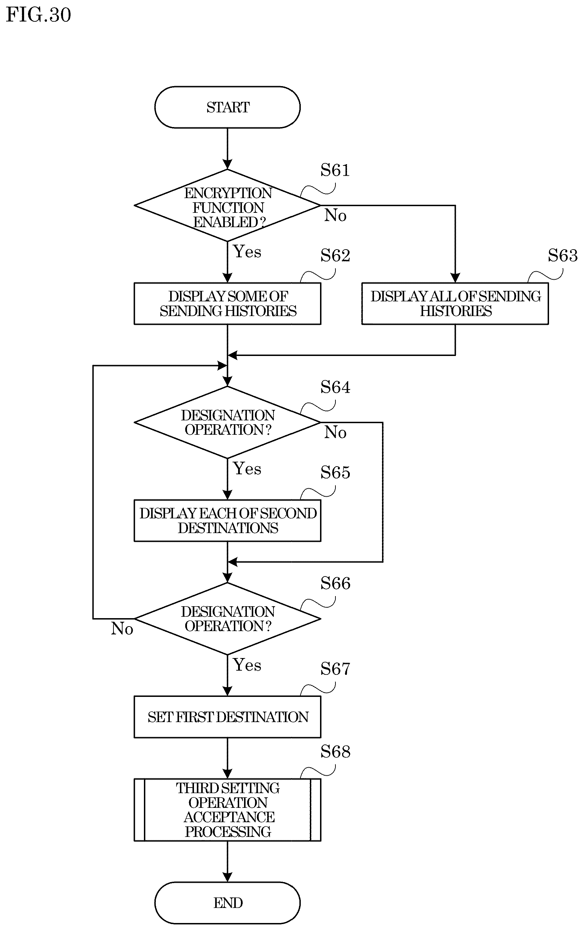

Next, exemplary procedures of third destination setting processing executed by the control portion 18 in the image forming apparatus 1 will be described with reference to Fig. 30. It is noted that the third destination setting processing is executed when a user operation with respect to the operation key X15 is accepted in the destination setting screen X10 shown in Fig. 2.

### <Step S61>

First, in Step S61, the control portion 18 determines whether or not the encryption function is enabled.

Here, when determining that the encryption function is enabled (Yes in S61), the control portion 18 shifts the processing to Step S62. On the other hand, when determining that the encryption function is not enabled (No in S61), the control portion 18 shifts the processing to Step S63.

### <Step S62>

In Step S62, the control portion 18 causes the operation display portion 15 to display the sending history display screen X70 (see Fig. 12) including the sent emails other than the sent email including the second destination having the destination category set to BCC. In other words, the sent email including the second destination having the destination category set to BCC is excluded from the display target. Thus, it is possible to avoid a situation where the destination category of the first destination is set to BCC in accordance with the first mail designation operation when the encryption function is enabled. Of the processing of Step S62, the processing of excluding the sent email including the second destination having the destination category set to BCC from the display target is executed by the prohibition processing portion 44 of the control portion 18.

### <Step S63>

In Step S63, the control portion 18 causes the operation display portion 15 to display the sending history display screen X70 (see Fig. 12) including the sent emails.

### <Step S64>

In Step S64, the control portion 18 determines whether or not the second mail designation operation has been accepted.

Here, when determining that the second mail designation operation has been accepted (Yes in S64), the control portion 18 shifts the processing to Step S65. On the other hand, when determining that the second mail designation operation has not been accepted (No in S64), the control portion 18 shifts the processing to Step S66.

### <Step S65>

In Step S65, the control portion 18 causes the operation display portion 15 to display the second detail display screen X80 (see Fig. 13) including each of the second destinations included in the sent email designated by the second mail designation operation. Furthermore, in accordance with an input of a display end instruction of the second detail display screen X80, the control portion 18 shifts the processing to Step S66. The processing of Step S65 is executed by the first display processing portion 34 of the control portion 18.

### <Step S66>

In Step S66, the control portion 18 determines whether or not the first mail designation operation has been accepted.

Here, when determining that the first mail designation operation has been accepted (Yes in S66), the control portion 18 shifts the processing to Step S67. On the other hand, when determining that the first mail designation operation has not been accepted (No in S66), the control portion 18 shifts the processing to Step S64.

### <Step S67>

In Step S67, in accordance with the first mail designation operation, the control portion 18 sets each of the second destinations included in the sent email designated by the first mail designation operation as the first destination, and sets the destination category of each of the first destinations to be the same as the destination category of the second destination corresponding to the first destination. The processing of Step S67 is executed by the second setting processing portion 35 of the control portion 18.

### <Step S68>

In Step S68, the control portion 18 executes third setting operation acceptance processing to be described below.

### [Third setting operation acceptance processing]

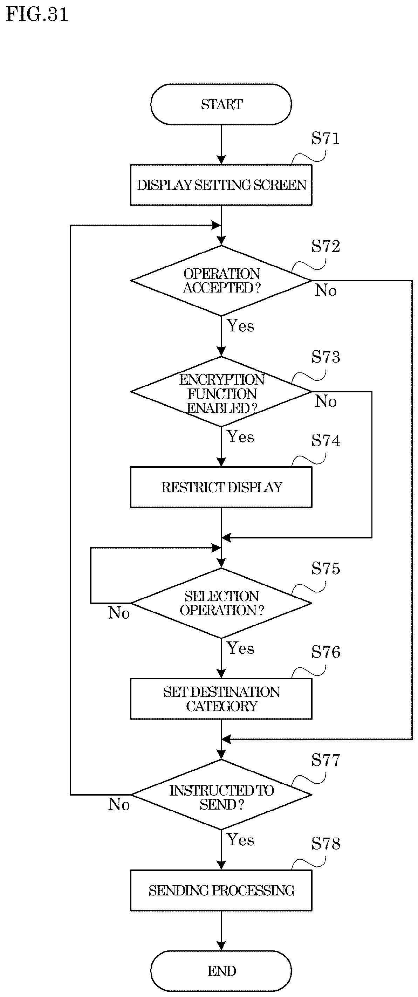

Next, with reference to Fig. 31, another example of a part of the email sending method according to the present disclosure will be described along with exemplary procedures of the third setting operation acceptance processing executed in Step S68 in the third destination setting processing.

### <Step S71>

First, in Step S71, the control portion 18 causes the operation display portion 15 to display the destination setting screen X10 (see Fig. 14) including the destination display field X31 corresponding to each of the first destinations set by the first mail designation operation. The processing of Step S71 is another example of accepting according to the present disclosure and is executed by the first acceptance processing portion 36 of the control portion 18.

### <Step S72>

In Step S72, the control portion 18 determines whether or not the setting operation (an operation with respect to the destination category setting key X33) has been accepted in the destination setting screen X10.

Here, when determining that the setting operation has been accepted (Yes in S72), the control portion 18 shifts the processing to Step S73. On the other hand, when determining that the setting operation has not been accepted (No in S72), the control portion 18 shifts the processing to Step S77.

### <Step S73>

In Step S73, the control portion 18 determines whether or not the encryption function is enabled.

Here, when determining that the encryption function is enabled (Yes in S73), the control portion 18 shifts the processing to Step S74. On the other hand, when determining that the encryption function is not enabled (No in S73), the control portion 18 shifts the processing to Step S75.

### <Step S74>

In Step S74, the control portion 18 restricts the destination category to be displayed to TO or CC in the destination category selection area X34 displayed in accordance with the setting operation (see Fig. 5 and Fig. 24). The processing of Step S74 is another example of prohibiting according to the present disclosure and is executed by the prohibition processing portion 44 of the control portion 18.

### <Step S75>

In Step S75, the control portion 18 determines whether or not a user operation for selecting the destination category to be changed to has been accepted in the destination category selection area X34.

Here, when determining that a user operation for selecting the destination category to be changed to has been accepted (Yes in S75), the control portion 18 shifts the processing to Step S76. On the other hand, when determining that a user operation for selecting the destination category to be changed to has not been accepted (No in S75), the control portion 18 waits for the user operation for selecting the destination category to be changed to in Step S75.

### <Step S76>

In Step S76, the control portion 18 sets the destination category in accordance with the user operation for selecting the destination category to be changed to.

### <Step S77>

In Step S77, the control portion 18 determines whether or not an instruction to send the email has been input.

Here, when determining that the instruction to send the email has been input (Yes in S77), the control portion 18 shifts the processing to Step S78. On the other hand, when determining that the instruction to send the email has not been input (No in S77), the control portion 18 shifts the processing to Step S72.

### <Step S78>

In Step S78, the control portion 18 executes the sending processing. The processing of Step S78 is another example of sending according to the present disclosure and is executed by the sending processing portion 37 of the control portion 18.

### [Encryption function switch processing]

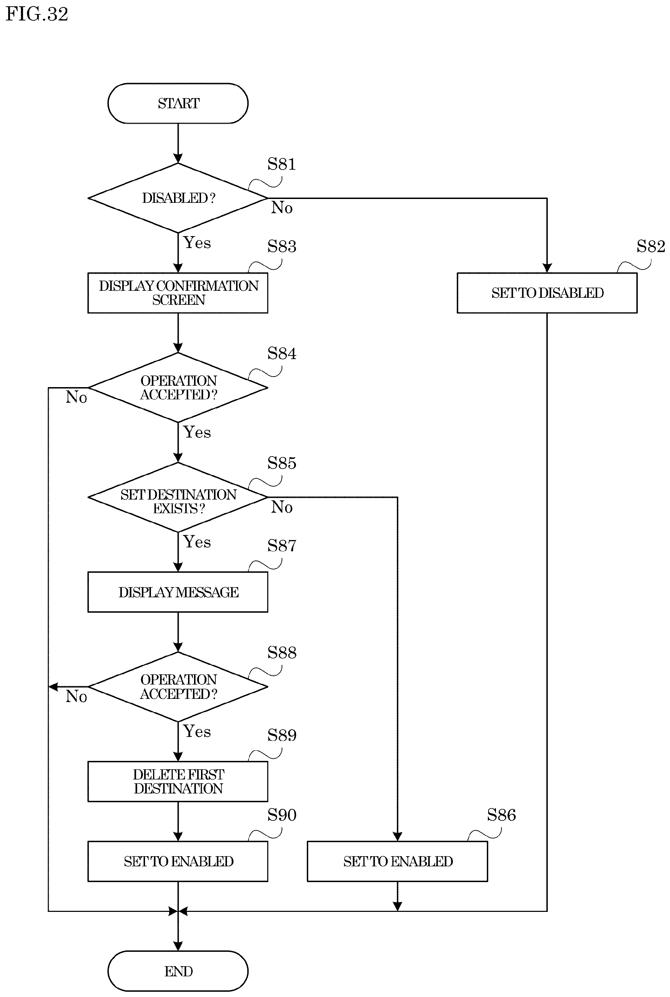

Next, with reference to Fig. 32, an example of the remaining portion of the email sending method according to the present disclosure will be described along with exemplary procedures of encryption function switch processing executed by the control portion 18 in the image forming apparatus 1. It is noted that the encryption function switch processing is executed when a user operation with respect to the operation key X151 is accepted in the advanced setting screen X150 (see Fig. 21).

### <Step S81>

First, in Step S81, the control portion 18 determines whether or not the encryption function is disabled.

Here, when determining that the encryption function is disabled (Yes in S81), the control portion 18 shifts the processing to Step S83. On the other hand, when determining that the encryption function is not disabled (No in S81), the control portion 18 shifts the processing to Step S82.

### <Step S82>

In Step S82, the control portion 18 sets the encryption function to disabled. The processing of Step S82 is an example of setting according to the present disclosure and is executed by the first setting processing portion 43 of the control portion 18.

### <Step S83>

In Step S83, the control portion 18 causes the operation display portion 15 to display the confirmation screen X160 (see Fig. 22).

### <Step S84>

In Step S84, the control portion 18 switches subsequent processing in accordance with the operation accepted in the confirmation screen X160. Specifically, when the function switch operation (an operation with respect to the operation key X161) is accepted in the confirmation screen X160 (Yes in S84), the control portion 18 shifts the processing to Step S85. Furthermore, when an operation with respect to the operation key X162 is accepted in the confirmation screen X160 (No in S84), the control portion 18 ends the encryption function switch processing.

### <Step S85>

In Step S85, the control portion 18 determines whether or not the set first destination exists.

Here, when determining that the set first destination exists (Yes in S85), the control portion 18 shifts the processing to Step S87. On the other hand, when determining that the set first destination does not exist (No in S85), the control portion 18 shifts the processing to Step S86.

### <Step S86>

In Step S86, the control portion 18 sets the encryption function to enabled. The processing of Step S86 is another example of setting according to the present disclosure and is executed by the first setting processing portion 43 of the control portion 18.

### <Step S87>

In Step S87, the control portion 18 causes the operation display portion 15 to display the message display area X171 (see Fig. 25) including a message for the user.

### <Step S88>

In Step S88, the control portion 18 switches the subsequent processing in accordance with the operation accepted in the message display area X171. Specifically, when an operation with respect to the operation key X172 is accepted in the message display area X171 (Yes in S88), the control portion 18 shifts the processing to Step S89. Furthermore, when an operation with respect to the operation key X173 is accepted in the message display area X171 (No in S88), the control portion 18 ends the encryption function switch processing.

### <Step S89>

In Step S89, the control portion 18 deletes the set first destination. Thus, it is possible to avoid a situation where the first destination having the destination category set to BCC remains after the encryption function is switched from disabled to enabled. Therefore, it is possible to suppress a situation where the email including the first destination having the destination category set to BCC is sent. The processing of Step S89 is executed by the deletion processing portion 45 of the control portion 18.

### <Step S90>

In Step S90, the control portion 18 sets the encryption function to enabled. The processing of Step S90 is another example of setting according to the present disclosure and is executed by the first setting processing portion 43 of the control portion 18.

In this manner, in the image forming apparatus 1, when the encryption function is enabled, the acceptance of the setting operation for setting the destination category of the first destination to BCC by the first acceptance processing portion 36 is prohibited. Thus, it is possible to suppress leakage of the first destination set to BCC to the recipient of the email.

It is noted that when the encryption function is enabled, the prohibition processing portion 44 may prohibit sending of the email including the first destination having the destination category set to BCC by the sending processing portion 37. Alternatively, when the encryption function is enabled, the prohibition processing portion 44 may prohibit both the acceptance of the setting operation for setting the destination category of the first destination to BCC by the first acceptance processing portion 36 and the sending of the email including the first destination having the destination category set to BCC by the sending processing portion 37.

Furthermore, in accordance with the destination group designation operation for designating the destination group displayed on the operation display portion 15, the first acceptance processing portion 36 may cause the operation display portion 15 to display each of the first destinations included in the destination group designated by the destination group designation operation together with the destination category, and accept the setting operation for each of the first destinations.

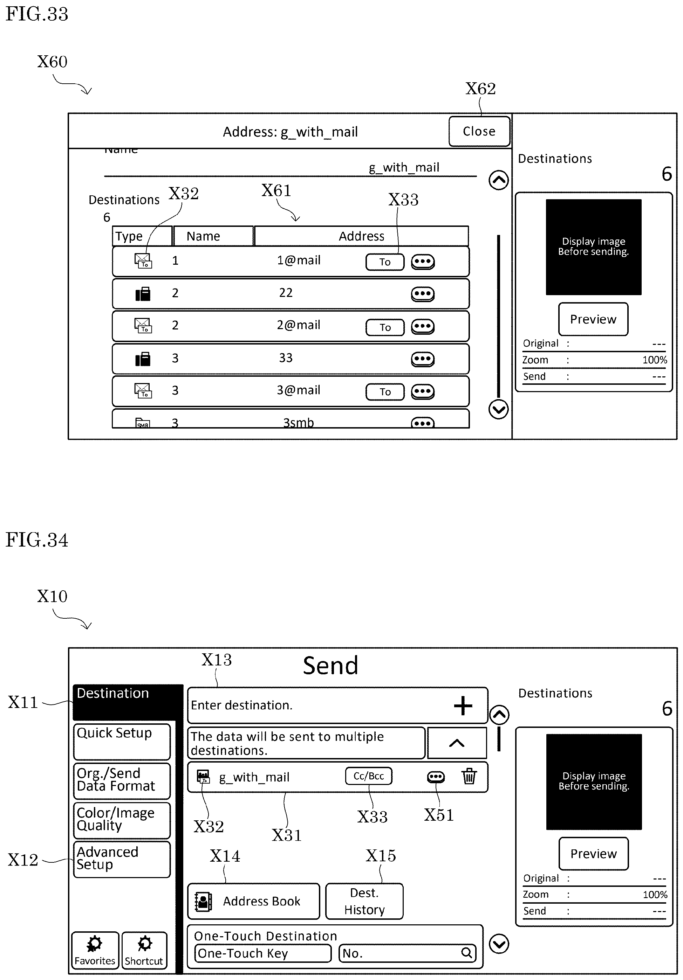

For example, in accordance with the destination group designation operation accepted in the destination setting screen X10 shown in Fig. 8 (an operation with respect to the detail display key X51), the first acceptance processing portion 36 may cause the operation display portion 15 to display the first detail display screen X60 shown in Fig. 33. The first detail display screen X60 shown in Fig. 33 includes the destination category setting key X33 corresponding to each of the first destinations included in the destination group. Thus, the user can individually set the destination category of each of the first destinations included in the destination group.

For example, when the destination category of each of the first destinations is individually set in the first detail display screen X60 shown in Fig. 33, the first acceptance processing portion 36 only needs to cause the destination setting screen X10 shown in Fig. 34 to be displayed. The destination category setting key X33 included in the destination setting screen X10 shown in Fig. 34 displays type identification information with which a type of the destination category included in the destination group can be identified.

Furthermore, the fourth acceptance processing portion 39 may cause the operation display portion 15 to display the type identification information with which the type of the destination category included in the email can be identified together with the email being sent, and accept the fourth mail designation operation.

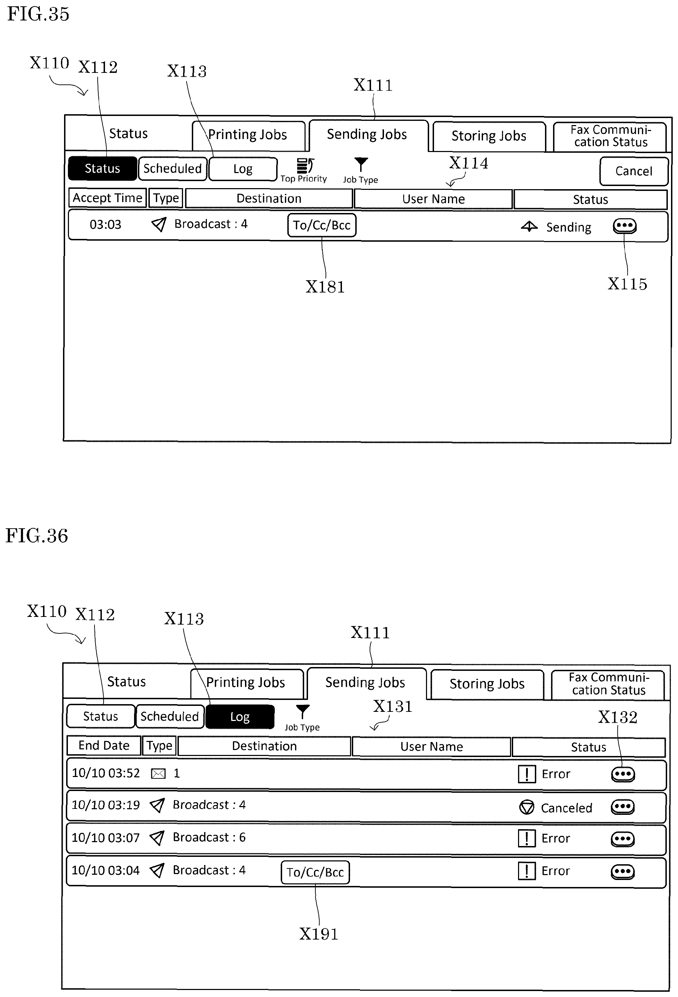

For example, the fourth acceptance processing portion 39 may cause the operation display portion 15 to display the job status display screen X110 shown in Fig. 35 in accordance with a predetermined user operation on the operation display portion 15. The job status display screen X110 shown in Fig. 35 includes a display area X181 for displaying the type identification information.

Furthermore, the third acceptance processing portion 41 may cause the operation display portion 15 to display the type identification information with which the type of the destination category included in the email can be identified together with the sent email, and accept the third mail designation operation.

For example, when a user operation with respect to the log key X113 is accepted in the job status display screen X110 shown in Fig. 35, the third acceptance processing portion 41 may cause the operation display portion 15 to display the completed job display area X131 shown in Fig. 36. The completed job display area X131 shown in Fig. 36 includes a display area X191 for displaying the type identification information.

Furthermore, the fourth display processing portion 38 may display the destination category of the first destination when the email to be sent includes one first destination, and not display the destination category when the email to be sent includes a plurality of first destinations.

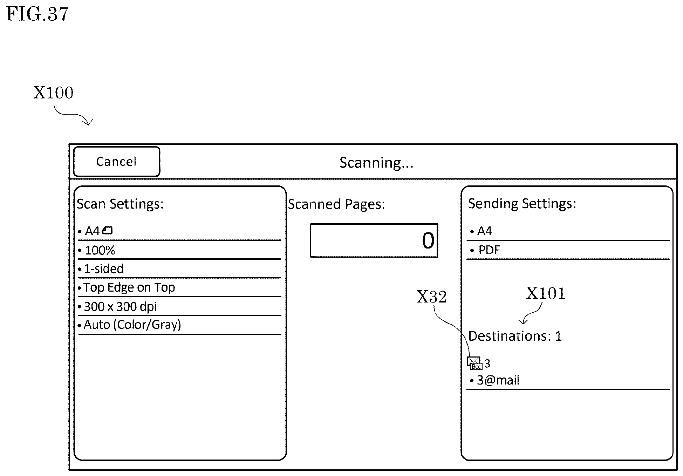

For example, when the email to be sent includes one first destination, the fourth display processing portion 38 may cause the operation display portion 15 to display the execution state display screen X100 shown in Fig. 37 while the image reading portion 12 is reading an image of a document sheet. The destination display area X101 shown in Fig. 37 includes the icon image X32 indicating the destination category of the first destination included in the email to be sent.

It is to be understood that the embodiments herein are illustrative and not restrictive, since the scope of the disclosure is defined by the appended claims rather than by the description preceding them, and all changes that fall within metes and bounds of the claims, or equivalence of such metes and bounds thereof are therefore intended to be embraced by the claims.

## Claims

1. A communication device (1), comprising:
a sending processing portion (37) which sends an email;
a first acceptance processing portion (36) which accepts a setting operation for setting a destination category of a first destination of the email unsent;
a first setting processing portion (43) which sets enable/disable of an encryption function for encrypting the email by S/MIME; and
a prohibition processing portion (44) which prohibits, when the encryption function is enabled, one or both of the acceptance of the setting operation for setting the destination category of the first destination to BCC by the first acceptance processing portion (36) and the sending of the email including the first destination having the destination category set to BCC by the sending processing portion (37).

2. The communication device (1) according to claim 1, wherein
the prohibition processing portion (44) prohibits, when the encryption function is enabled, the acceptance of the setting operation for setting the destination category of the first destination to BCC by the first acceptance processing portion (36), and
the communication device (1) comprises:
a deletion processing portion (45) which deletes, when the encryption function is set from disabled to enabled by the first setting processing portion (43), at least the first destination having the destination category set to BCC out of the first destinations already set.

3. The communication device (1) according to claim 1 or 2, comprising:
a second setting processing portion (35) which sets, in accordance with an address designation operation for designating an email address, the email address designated by the address designation operation as the first destination, and also sets TO as the destination category of the first destination, wherein
the first acceptance processing portion (36) causes a display portion (15) to display each of the first destinations set in accordance with the address designation operation together with the destination category, and accepts the setting operation for each of the first destinations, and
the prohibition processing portion (44) prohibits, when the encryption function is enabled, the acceptance of the setting operation for setting the destination category of the first destination to BCC by the first acceptance processing portion (36).

4. The communication device (1) according to claim 3, wherein
an address group including one or more of the email addresses is registered in advance in the communication device (1),
the second setting processing portion (35) sets, in accordance with an address group designation operation for designating the address group, each of the email addresses included in the address group designated by the address group designation operation as the first destination, and also collectively sets TO as the destination category of each of the first destinations, and
the first acceptance processing portion (36) causes the display portion (15) to display each of destination groups including one or a plurality of the first destinations set in accordance with the address group designation operation together with the destination categories that have been collectively set, and accepts the setting operation for collectively setting, for each of the destination groups, the destination categories of the first destinations included in the destination group.

5. The communication device (1) according to claim 4, wherein
the first acceptance processing portion (36) causes the display portion (15) to display, in accordance with a destination group designation operation for designating the destination group displayed on the display portion (15), each of the first destinations included in the destination group designated by the destination group designation operation together with the destination category, and accepts the setting operation for each of the first destinations.

6. The communication device (1) according to any one of claim 3 to 5, comprising:
a second acceptance processing portion (33) which causes the display portion (15) to display each of the emails already sent, and accepts a first mail designation operation for designating the displayed email already sent, wherein
the second setting processing portion (35) sets, in accordance with the first mail designation operation, each of second destinations included in the email already sent, that has been designated by the first mail designation operation, as the first destination, and also sets the destination category of each of the first destinations to be same as the destination category of the second destination corresponding to the first destination, and
the prohibition processing portion (44) prohibits, when the encryption function is enabled, the acceptance of the first mail designation operation for designating the email already sent, that includes the second destination having the destination category set to BCC.

7. The communication device (1) according to claim 6, wherein
the second acceptance processing portion (33) accepts, together with the first mail designation operation, a second mail designation operation for designating the email already sent by a method different from that of the first mail designation operation, and
the communication device (1) comprises:
a first display processing portion (34) which causes the display portion (15) to display, in accordance with the second mail designation operation, each of the second destinations included in the email already sent, that has been designated by the second mail designation operation, together with the destination category.

8. The communication device (1) according to any one of claim 3 to 7, comprising:
a third acceptance processing portion (41) which causes the display portion (15) to display each of the emails already sent, and accepts a third mail designation operation for designating the displayed email already sent; and
a second display processing portion (42) which causes the display portion (15) to display, in accordance with the third mail designation operation, each of second destinations included in the email already sent, that has been designated by the third mail designation operation, together with the destination category.

9. The communication device (1) according to claim 8, wherein
the third acceptance processing portion (41) causes the display portion (15) to display, together with the email already sent, type identification information with which a type of the destination category included in the email can be identified, and accepts the third mail designation operation.

10. The communication device (1) according to any one of claim 3 to 9, comprising:
a fourth acceptance processing portion (39) which causes the display portion (15) to display each of the emails being sent, and accepts a fourth mail designation operation for designating the displayed email being sent; and
a third display processing portion (40) which causes the display portion (15) to display, in accordance with the fourth mail designation operation, each of third destinations included in the email being sent, that has been designated by the fourth mail designation operation, together with the destination category.

11. The communication device (1) according to claim 10, wherein
the fourth acceptance processing portion (39) causes the display portion (15) to display, together with the email being sent, type identification information with which a type of the destination category included in the email can be identified, and accepts the fourth mail designation operation.

12. The communication device (1) according to any one of claim 3 to 11, comprising:
an image reading portion (12) which reads an image of a document sheet to be attached to the email in accordance with an input of an instruction to send the email; and
a fourth display processing portion (38) which causes the display portion (15) to display any of the first destinations included in the email to be sent, during the reading of the image of the document sheet by the image reading portion (12), wherein
the fourth display processing portion (38) causes the destination category of the first destination to be displayed when a number of first destinations included in the email to be sent is one, and does not cause the destination category to be displayed when a plurality of the first destinations are included in the email to be sent.

13. The communication device (1) according to any one of claim 3 to 12, wherein
the display portion (15) includes a first display portion (15) provided in the communication device (1) and a second display portion provided in another communication device communicably connected to the communication device (1), and
when the first destinations are set in accordance with a user operation on the first display portion (15), the first acceptance processing portion (36) causes the first display portion (15) to display each of the set first destinations, and accepts the setting operation for setting the destination category to any of TO, CC, and BCC for each of the first destinations, and when the first destinations are set in accordance with the user operation on the second display portion, the first acceptance processing portion (36) causes the second display portion to display each of the set first destinations, and accepts the setting operation for setting the destination category to one or more of TO, CC, and BCC for each of the first destinations.

14. An email sending method, comprising:
sending an email;
accepting a setting operation for setting a destination category of a first destination of the email unsent;
setting enable/disable of an encryption function for encrypting the email by S/MIME; and
prohibiting, when the encryption function is enabled, one or both of the acceptance of the setting operation for setting the destination category of the first destination to BCC and the sending of the email including the first destination having the destination category set to BCC.
